# EUROPEAN PATENT SPECIFICATION

(11) **EP 0 644 157 B1**
(45) Date of publication and mention of the grant of the patent: **19.05.1999**
(21) Application number: 94907692.1
(22) Date of filing: 25.02.1994
(51) Int. Cl.: C01B 33/44, C01B 33/36, B01J 20/10, C11B 7/00, G01N 30/48

(54) **Chromatographic packing material comprising a cation-substituted clay mineral, process for producing the packing material and using the same**
Chromatographisches Packmaterial, enthaltend ein kationensubstituiertes Tonmineral, Vefahren zur Herstellung des Packmaterials sowie dessen Verwendung
Matériau comprenant un minéral d'argile à cations substitués pour colonne chromatographique, procédé pour sa préparation et son utilisation

(30) Priority: 26.02.1993 JP 63217/93
(43) Date of publication of application: 22.03.1995
(73) Proprietor: SHISEIDO COMPANY LIMITED, Chuo-ku, Tokyo 104-8010 (JP)
(72) Inventor: OHTSU, Yutaka, Shiseido Research Center, Yokohama-shi, Kanagawa 223 (JP); TANAKA, Isao, Shiseido Research Center, Yokohama-shi, Kanagawa 223 (JP); KADOTA, Yasuhiko, Shiseido Research Center, Yokohama-shi, Kanagawa 223 (JP); YAMAGUCHI, Michihiro, Shiseido Research Center, Yokohama-shi, Kanagawa 223 (JP)
(74) Representative: Perry, Robert Edward
(86) International application number: JP9400311
(87) International publication number: WO9419278

(56) References cited:
- JP-A- 1 199 155
- JP-A-63 265 807
- CHEMICAL ABSTRACTS, vol. 114, no. 11, 18 March 1991 Columbus, Ohio, US; abstract no. 96703c, page 241; & KAGAKU KOGAKU RONBUNSHU, vol. 17, no. 1, 1991 pages 29-34, Z. YAMADA ET AL.
- CHEMICAL ABSTRACTS, vol. 82, no. 4, 27 January 1975 Columbus, Ohio, US; abstract no. 22178j, page 371; & AN. QUIM., vol. 70, no. 6, 1974 pages 503-507, M. I. TELLERIA ET AL.
- CLAYS AND CLAY MINERALS, vol. 27, no. 4, 4 August 1979 LAWRENCE, KANSAS, US, pages 269-278, R. A. SCHOONHEYDT ET AL.

## Description

### FIELD OF THE INVENTION

The present invention relates to a cation-exchanged clay mineral, a packing material for chromatography using the same and a method of producing the same. More particularly, the present invention relates to an improvement of an exchanging cation thereof.

### BACKGROUND OF THE INVENTION

Chromatography is generally used for analysis or separation and refinement of various substances. Liquid chromatography is divided largely into adsorption chromatography and partition chromatography according to the separation mechanism.

Partition chromatography is further divided into normal-phase partition chromatography and reversed phase partition chromatography according to the polarities of the eluate and the packing material.

Most of the packing materials used for adsorption chromatography and normal phase partition chromatography are totally porous silica gel packing materials in which macropores and micropores are dispersed reticulately. Alternatively, inorganic supports such as alumina and porous glass materials, and porous polymers such as polystyrene-divinyl benzene, polyvinyl alcohol and polyhydroxy methacrylate are used. Calcium hydroxide powder, calcium phosphate gel, etc. are used for specific purposes.

Above-described chromatographic supports (e.g., silica gel) modified with alkyl groups, such as octadecyl groups, are often used for reversed-phase chromatography.

Other packing materials are also used, for example, packing materials for cation-exchange liquid chromatography such as silica gel or a porous polymer with a compound having a sulfonyl group or carboxyl group combined therewith and packing materials for anion-exchange liquid chromatography such as silica gel or a porous polymer with a quaternary ammonium or a diethylamino group combined therewith.

All of these packing materials, however, suffer from various problems. Especially, the discrimination between saturation and unsaturation is so poor that the discrimination among substances having similar molecular weights is very difficult. An improvement at this point has therefore den in strong demand.

As a packing material for meeting such a demand, the present inventors developed a packing material disclosed in Japanese Patent Laid-Open No. 199155/1989.

This packing material is a swelling clay mineral with the ions between layers substantially replaced by cations other than sodium ions, especially, silver ions. Since this packing material shows a discrimination between saturation and unsaturation, it is possible to separate a wide variety of unsaturated compounds according to the degree of unsaturation. The packing material is therefore used as a means of analyzing and separating various compounds.

Even this packing material composed of the clay mineral, however, very strongly adsorbs a highly unsaturated compound having a degree of unsaturation of not less than 3, and the peak in chromatography becomes broad, which makes efficient and short-tine analysis and separation impossible.

In addition, a poor reproducibility of retention time in certain solvents has been a big problem.

### SUMMARY OF THE INVENTION

Accordingly, it is an object of the present invention to eliminate the above-described problems in the related art and to provide a packing material for chromatography which has a high resolution, especially, with respect to an unsaturated compound and an excellent stability, and a cat ion-exchanged clay mineral used as the packing material.

As a result of studies undertaken by the present inventors so as to achieve this aim, it has been found that the problem of a broad peak of a highly unsaturated compound and the poor reproducibility of retention time of an unsaturated compound can be solved then a low-valence metal existing between layers of a clay mineral is an ammine or amine complex. On the basis of this finding, the present invention has been achieved.

To state this concretely, it was found that the low-valence metal ions such as silver ions existing between layers of a clay mineral not only exist in the form of ions but also are oxidized or reduced when they come into contact with a solvent. In other words, the existing state of the ions changes, which is the main cause of a broad peak and a wide variety of the holding time of a highly unsaturated compound.

For example, it was confirmed as a result of X-ray analysis that the monovalent silver ions existing between layers of a clay mineral are oxidized into silver oxide at a high temparature, or by a solvent or reduced into metal silver.

It was also confirmed that the monovalent copper ions which are considered to show a discrimination between saturation and unsaturation in the saw way as silver are easily oxidized into divalent copper ions when they are dried. The divalent copper ions don't separate unsaturated substances anymore.

The present inventors therefore payed attention to the existing form of the low-valence metal ions which exist between layers of a clay mineral.

In a first aspect of the present invention, there is provided a cation-exchanged clay mineral comprising a swelling clay mineral with the cations between layers substantially replaced by low-valence metal amine complexes and/or low-valence metal amine complexes.

A packing material for chromatography provided in a second aspect of the present invention comprises a cation-exchanged clay mineral provided in the first aspect of the present invention.

A clay mineral provided in a third aspect of the present invention is characterized in that the low-valence metal ammine complex is represented by the general formula: [M(NH₃)_{1∼3}]X (wherein M is a metal, and X is an anion).

In a clay mineral provided in a fourth aspect of the present invention, M is monovalent copper, silver or gold.

In a fifth aspect of the present invention, there is provided a method of producing a cation-exchanged clay mineral comprising the steps of immersing a swelling clay mineral in an ammonium ion solution, drying the swelling clay mineral, and immersing the dried swelling clay mineral in a low-valence metal amine complex solution and/or a low-valence metal amine complex solution so as to substantially replace the cations between layers by the low-valence metal amine complexes and/or the low-valence metal ammine complexes.

In a method of producing a cation-exchanged clay mineral provided in a sixth aspect of the present invention, the clay mineral immersed in the low-valence metal amine complex solution and/or the low-valence metal ammine complex solution is further heated.

In a seventh aspect of the present invention, there is provided a method of separating fish oil and fat by separating and collecting docosahexaenoic acid by using a packing material obtained by substantially replacing the cations between layers of a swelling clay mineral by low-valence metal amine complexes and/or low-valence metal a:ine complexes.

In a method of separating fish oil and fat provided in an eighth aspect of the present invention, a fatty ester obtained by hydrolyzing and further esterifying fish oil and fat is used as an object of separation.

In a method of separating fish oil and fat provided in a ninth aspect of the present invention, a supercritical fluid is used as a solvent.

The structure of the present invention will be explained in more detail in the following.

A swelling clay mineral used in the present invention is a pyllosilicate mineral which belongs to a smectite group. Among smectites, montmorillonite, beidellite, nontronite, saponite and hectorite are preferably used. They can be either natural or synthetic. As a commercially available swelling clay mineral, Kunipia, SMECTON (produced by Kunimine corporation), Beegum (produced by Bunderbuilt), Laponite (produced by Lapolte), Fluorine Tetrasilicon Mica (produced by Topy Industry. Ltd.). etc. are usable. In the present invention, at least one is selected from these swelling clay minerals. As a packing material for chromatography, a powder having a large specific surface area is suitable because it has a large adsorption capacity and it can strongly retain solute molecules.

In addition, spherical clay mineral particles are more suitable for a packing material for chromatography than a clay mineral having an irregular shape because in the former, the pressure loss and the pressure fluctuation are small. From this point of view, Smecton, which is a synthetic saponite, and Laponite, which is a synthetic hectorite are especially suitable because by spray drying an aqueous gel thereof it is possible to obtain spherical clay mineral particles.

As ammine complexes (ammonia complex salt) of a low-valence metal which replace the sodium ions existing between layers of the swelling clay mineral are usable ammine complexes of monovalent copper, silver and gold represented by the formula [M(NH₃)_{1∼3}]X (wherein M is a metal, and X is an anion). Although ammine complexes of divalent copper, mercury, platinum and palladium, are also usable, use of amine complexes of monovalent copper, silver or gold is preferable. Na-montmorillonite exchanged with cationic ammine complexes of silver and copper are reported in Chemical Abstracts 82:22178;. 18.03.1991 & KAGAKU KOGAKU RONBUNSHU vol. 17 no. 1 (1991), Z. YAMADA et al.

The exchange amount of these metal ammine complexes is about 60 to 150 milli-equivalents per 100 g of a clay mineral, but a small amount of metal ammine complex such as 10 milli-equivalents can provide the clay mineral with a discrimination between saturation and unsaturation

An ammine complex is prepared by dissolving one of the above-described monovalent or divalent metal salts (e.g., cuprous chloride and silver nitrate) in an appropriate amount of solvent such as water and alcohol, adding an appropriate amount of 25 to 28% ammonia water and stirring the mixture.

In the case of preparing an amine complex, an organic amine is preferably used in place of the ammonia water in the process of preparing an ammine complex.

As the organic amine, ethyl amine, ethylene diamine, diethylenetriamine, triethylenetetramine, tetraethylenepentamine, monoethanolamine, etc., are usable.

These low-valence metal ammine complexes or amine complexes can be used singly or in the form of a mixture.

The metal ion content in the packing material for chromatography in the present invention is different in metals, but it is 0.1 to 15 wt%, preferably 1 to 5 wt%.

When a cation-exchanged clay mineral of the present invention is produced, it is preferable that a material clay mineral is immersed in do ammonium ion solution in advance.

For example, montmorillonite has three-layered laminates. As shown in Fig. 1, in each three-layered laminate, sodium ions 14 are combined with an interlayer 12 between layers 10a and 10b. The sodium ions 14 in the interlayer 12 are first replaced by ammonium ions 16, as shown in Fig. 2, and the ammonium ions 16 are further replaced by low-valence metal complexes 18, as shown in Fig. 3.

In this manner, when the clay mineral is immersed in an ammonium ion solution so as to exchange the sodium ions in the clay mineral for the ammonium ions, the water resistance is improved and some types of metal ammine complexes are more easily exchanged for the ammonium ions which have replaced the ions between layers of the metal clay in advance.

However, since cat ion exchange for ammine complexes or amine complexes is easy in some types of mineral clay even if they are not immersed in an ammonium ion solution, the step of immersing a clay mineral in an ammonium solution is not essential.

The concentration of the ammonium ions in a solution in which the clay mineral of the present invention is immersed is 0.1 to 10 N. preferably 0.5 to 3 N. The pH of the ammonium ion solution is adjusted to 7 to 12, preferably 8.5 to 10.5 by adding ammonia.

As the ammonia added, ammonia water is preferable, but ammonia gas is usable instead.

The clay mineral is preferably immersed in an ammonium solution for not less than 1 hour.

After immersion, the solvent is removed by filtration or the like, and dried at a temperature of not lower than 60°C, preferably 100 to 150°C. By drying the clay mineral in this way, the ammonia in the fine pores of the clay mineral is removed, thereby facilitating ion exchange for metal complex ions.

It is also preferable to heat the clay mineral after the cations exchanged for metal amine complexes or metal amine complexes.

The heating temperature and the heating time are different in metals. The heating temperature which does not decompose metal ammine complexes or metal amine complexes is preferable. It is 80 to 500°C, more preferably 100 to 250°C. The heating time is 1 to 48 hours, preferably 4 to 18 hours. The higher the heating temperature and the longer the heating time, the stronger the holding power in chromatography and the easier the control over the retention time.

By heating the clay mineral in this manner, it is possible to enhance the activity of the silanol group exposed to the outer surface of the clay mineral, thereby further improving the function of the packing material.

The cation-exchanged clay mineral of the present invention is classified by an ordinary dry-classification method and used as a packing material for chromatography.

The packing material of the present invention is usable as a packing material not only for liquid chromatography but also for supercritical chromatography or gas chromatography.

The above and other objects, features and advantages of the present invention will become clear from the following description of the preferred embodiments thereof, taken in conjunction with the accompanying drawings.

### BRIEF DESCRIPTION OF THE DRAWING

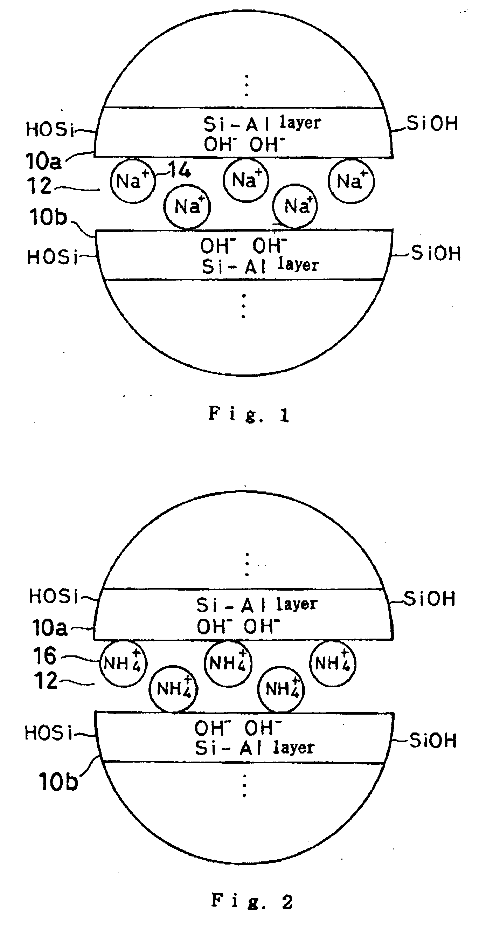

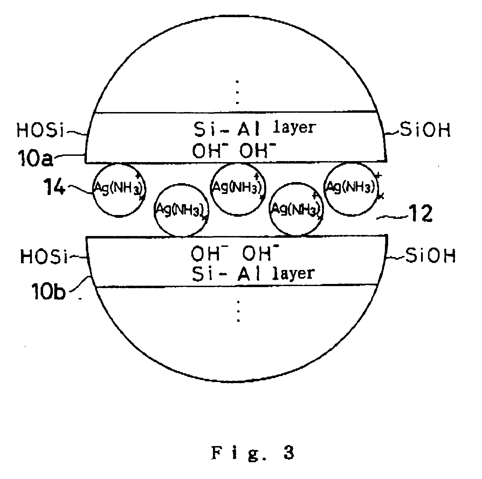

Fig. 1, 2 and 3 are explanatory views of the process of producing a cation-exchanged clay mineral according to the present invention;

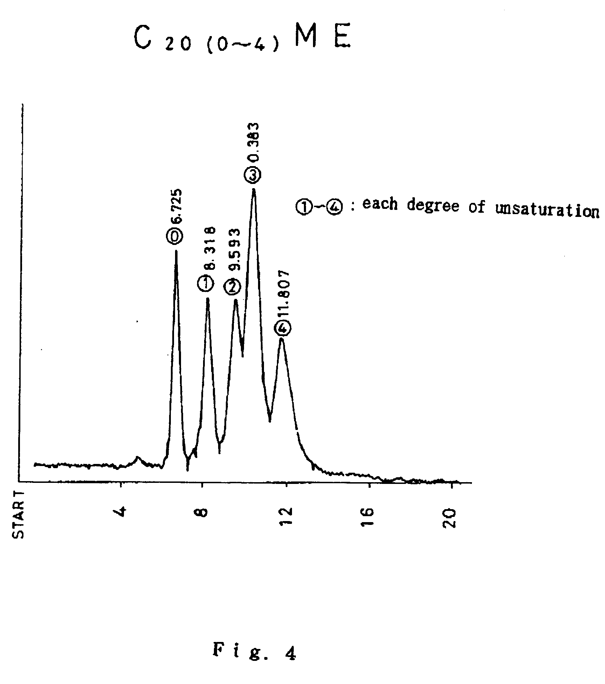

Fig. 4 is a chromatogram obtained by using the packing material in Example 1 of the present invention;

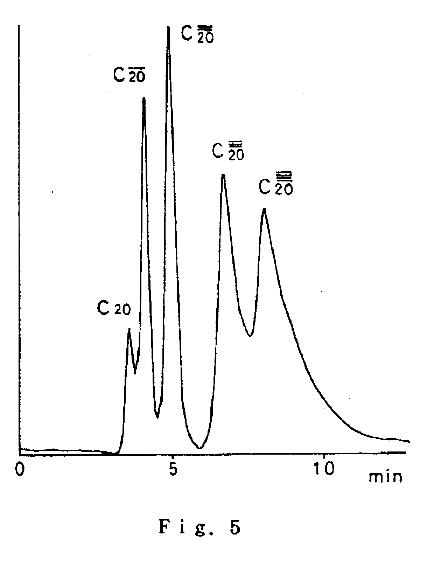

Fig. 5 is a chromatogram obtained by using the packing material in Comparative Example 1;

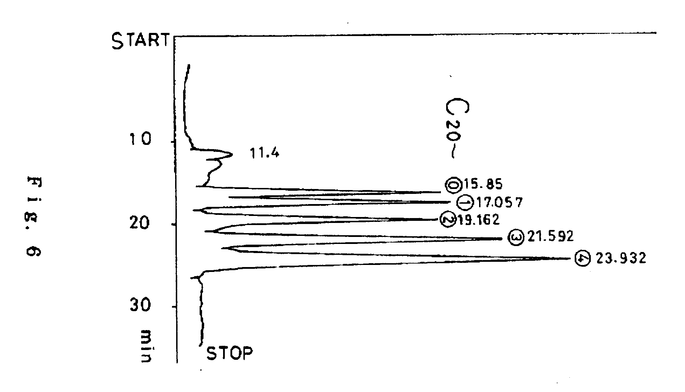

Fig. 6 is a chromatogram obtained when a mixture of fatty acid methyl esters having 20 carbon atoms and a degree of unsaturation of 0 to 4 was separated by using the packing material in Example 2;

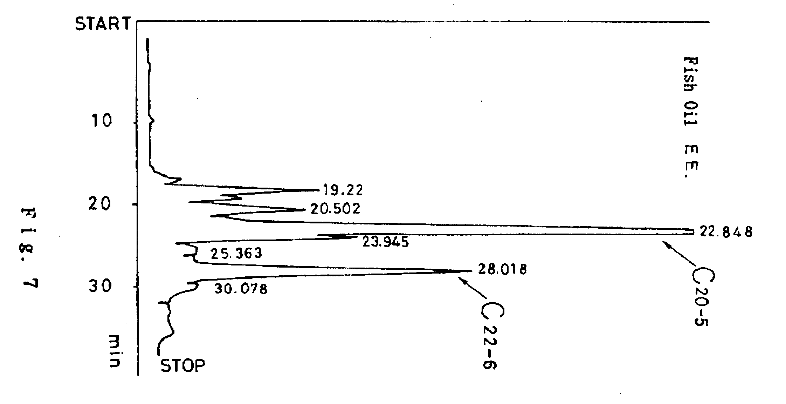

Fig. 7 is a chromatogram obtained when an ethyl ester of fish oil was separated by Using the packing material in Example 2;

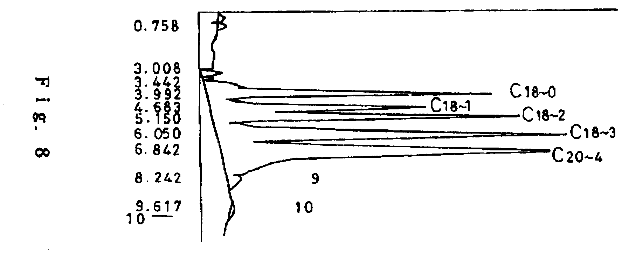

Fig. 8 is a chromatogram obtained by using the packing material in Example 3 of the present invention;

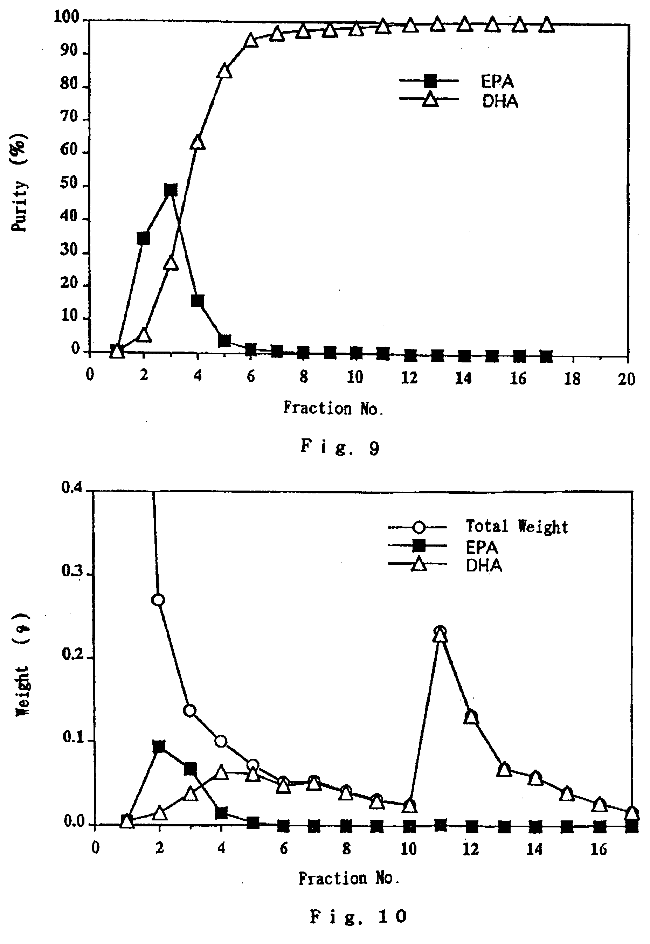

Fig. 9 is an explanatory view of the relationship between a fraction and the purity of each of EPA and DHA when the mixture of fatty acid ethyl esters preprared from fish oil and fat were separated and refined with a carbon dioxide supercritical fluid by using the packing material in Example 1;
Fig. 10 is an explanatory view of the relationship between a fraction and the yield of each of EPA and DHA when the mixture of fatty acid ethyl esters preprared from fish oil and fat were separated and refined with a carbon dioxide supercritical fluid by using the packing material in Example 1;

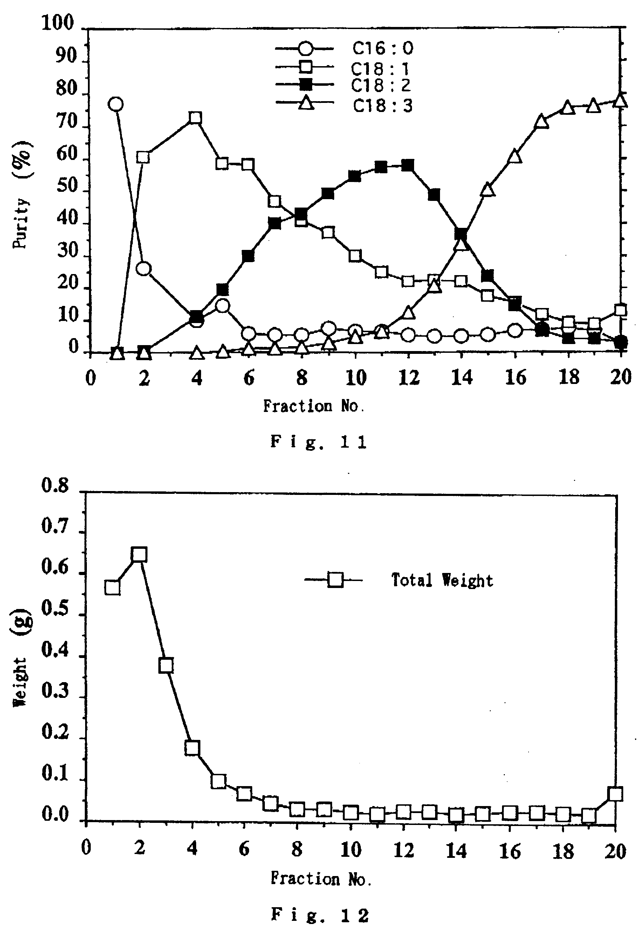

Fig. 11 is an explanatory view of the relationship between a fraction and the purity of each fatty acid when the mixture of fatty acid ethyl esters containing γ-linolenic acid ethyl ester was separated and refined with a carbon dioxide supercritical fluid by using the packing material in Example 1;
Fig. 12 shows the yield of each fraction when the mixture of fatty acid ethyl esters containing γ-linolenic ethyl ester acid was separated and refined with a carbon dioxide supercritical fluid by using the packing material in Example 1;

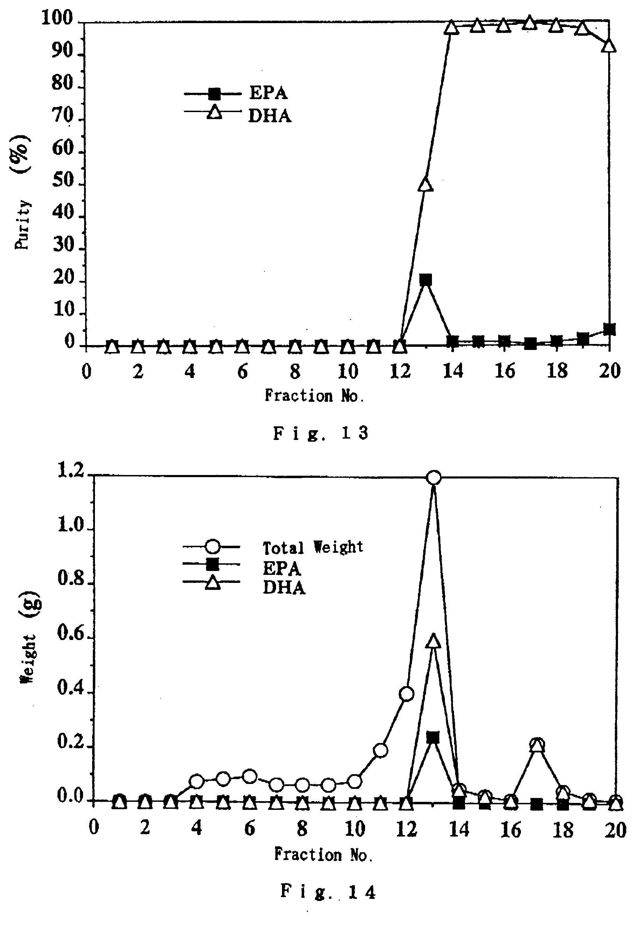

Fig. 13 is an explanatory view of the relationship between a fraction and the purity of each of EPA and DHA when the mixture of fatty acid ethyl esters preprared from fish oil and fat were separated and refined by liquid chromatography using the packing material in Example 1;
Fig. 14 is an explanatory view of the relationship between a fraction and the yield of each of EPA and DHA when the mixture of fatty acid ethyl esters preprared from fish oil and fat were separated and refined liquid chromatography using the packing material in Example 1;

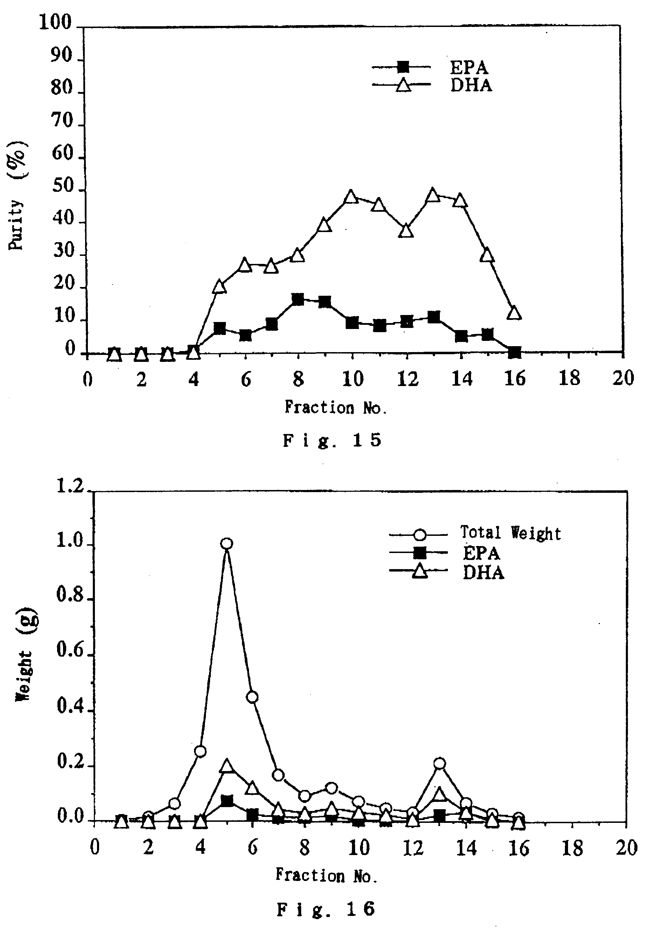

Fig. 15 is an explanatory view of the relationship between a fraction and the purity of each of EPA and DHA when DHA-containing triglyceride was separated and refined by liquid chromatography using the packing material in Example 1; and
Fig. 16 is an explanatory view of the relationship between a fraction and the yield of each of EPA and DHA when DHA-containing triclyceride were separated and refined liquid chromatography using the packing meterial in Example 1.

### EMBODIMENTS

The present invention will be explained hereinunder in more detail with reference to preferred embodiments of the present invention. It is to be understood, however, that the present invention is not restricted thereto.

### Example 1

900 g of Laponite XLG was dispersed in 30 l of ion exchange water under stirring. The thus-obtained gel was spray dried by a disk spray dry testing machine while rotating the disk at 20000 rpm at an inlet temperature of about 200°C and a discharge gas temperature of about 110°C, thereby obtaining 720 g of spherical clay mineral particles 2 to 20 µm in diameter. The spherical clay mineral particles were classified by a dry classifier TARBO CLASSIFINER TC-15N (produced by Nisshin Engineering) to obtain 180 g of a powder having a particle diameter of 3 to 8 µm.

30 g of the powder was putted into a 500-ml glass beaker, and 200 ml of 6% (W/V) ammonium nitrate/methanol solution and 0.66 ml of 28% ammonia water were added. After the mixture was stirred about 1 hour, it was filtered through a glass filter (G4). The filtrate was dried by a drier at 110°C for 6 hours, and the dry powder obtained was putted into a 500-ml beaker. Separately from this, 200 ml of methanol and 2.4 ml of 28% ammonia water were added to 2.55 g of silver nitrate to prepare a solution. The whole amount of solution vas added to the powder in the beaker and the mixture was stirred for 16 hours. Thereafter, the mixture was filtered through a glass filter. The filtrate was washed with 200 ml of 28% ammonia water/methanol (1 : 100), and thereafter filtered. After the filtering and washing process was repeated three times, the filtrate was dried at 160°C for 4 hours to obtain a packing material.

Above packing material was packed by a balanced-density technique into a stainless steel column having an inner diameter of 4.6 mm and length of 250 mm. The packed column was connected to a high-speed chromatograph and 1% ethanol/hexane as a mobile phase was flowed at a flow rate of 1 ml/min. The temperature was set at 35°C and a UV detector was used at a wavelength of 225 nm.

A mixture of fatty acid methyl esters having 20 carbon atoms and a degree of unsaturation of 0 to 4 was injecxted into the packed column as a sample. The chromatogram obtained is shown in Fig. 4. In the chromatogram, the substances were sharply separated and eluted in the ascending order of the degrees of unsaturation of 0 to 4.

### Comparative Example 1

1.7 g of silver nitrate was dissolved in 1 l of ethanol, and 10 g of the classified spherical clay mineral particles obtained in Example 1 were dispersed in the solution. After the mixture was stirred for 4 hours, it was washed with methanol and dried at 80°C to obtain a packing material. The packed column was connected to a high-speed liquid chromatograph and the same sample was injected into the column in the same way as in Example 1. The adsorption of the sample by the pricking material was so strong that no elution of a fatty methyl ester was observed in the chromatogram. The solvent as the mobile phase was then replaced by acetone, which has a stronger eluation power, and the detector was replaced by a differential refractometer. The chromatogram obtained is shown in Fig. 5. Five types of fatty methyl ester were separated and eluted, but the methyl esters having a degree of unsaturation of 3 to 4 showed a large tailing and separation was not good.

### Example 2

30 g of the classified spherical clay mineral particles obtained in Example 1 was charged into a 500-ml glass beaker, and 200 ml of 6% (W/V) ammonia nitrate/methanol solution and 1.0 ml of 28% ammonia water were added. After the mixture was stirred about 3 hours, it was filtered through a glass filter. The filtrate was dried by a drier at 110°C for 6 hours, and the dry powder obtained was charged into a 500-ml beaker. Separately from this, 400 ml of methanol and 5.0 ml of 28% ammonia water vere added to 1.49 g of copper (I) chloride to prepare a solution. The whole amount of solution was added to the powder in the beaker and the mixture was stirred for 24 hours. Thereafter, the mixture was filtered through a glass filter. The filtrate was washed with 200 ml of 28% ammonia water/methanol (1 : 100), and thereafter filtered. After the filtering and washing process was repeated three times, the filtrate was dried at 110°C for 16 hours to obtain a packing material. A stainless steel column having an inner diameter of 4.6 mm and a length of 250 mm was packed with the packing material.

The packed column was connected to a high-speed chromatograph and 0.5% acetonitrile/2% dioxane/hexane was used as a mobile phase at a flow rate of 0.5 ml/min. The temperature was set at 40°C and a UV detector was used at a wavelength of 225 nm.

A mixture of fatty methyl esters having 20 carbon atoms and a degree of unsaturation of 1 to 4 and an ethyl ester from fish oil were injected into the packed column as samples. The chromatograms obtained are shown in Figs. 6 and 7. The chromatogram of the mixture of fatty methyl esters shown in Fig. 6 has sharper peaks than that in Example 1, and any ingredient was separated out approximately completely. In the chromatogram of the ethyl esters from fish oil shown in Fig. 7, eicosapentaenoic ethyl ester having 20 carbon atoms and a degree of unsaturation of 5 and docosahexaenoic ethyl ester having 22 carbon atoms and a degree of unsaturation of 6, neither of which was eluted Comparative Example 1 were very sharply separated and eluted in 22.9 minutes and 28.0 minutes, respectively.

### Example 3

The spherical clay mineral particles obtained in Example 1 was subjected to ion exchange for silver ammine complexes, and thereafter dried at 110°C for 16 hours to obtain a packing material. The packing material was fired at 250°C for 4 hours. A stainless steel column having an inner diameter of 4.6 mm and a length of 250 mm was packed with the packing material. The packed column was connected to a supercritical fluid chromatograph (produced by Jasco corporation) and 10% (W/W) acetonitrile/carbon dioxide was used as a mobile phase at a flow rate of 1 ml/min in critical state of a pressure of 200 Kg and a temperature of 90°C. A UV detector was used at a wavelength of 225 nm.

A mixture of fatty methyl esters having 18 carbon atoms and a degree of unsaturation of 0 to 3 and a fatty methyl ester having 20 carbon atoms and a degree of unsaturation of 4 was injected into the packed column as a sample. The chromatogram obtained is shown in Fig. 8. As is clear from Fig. 8, it was also possible to sharply separate and elute the ingredients according to the degree of saturation by supercritical chromatography using the packing material of the present invention.

### Example 4

A stainless steel column having an inner diameter of 20 mm and a length of 250 mm was packed with 100 g of the packing material produced in Example 1 by an balanced-density technique to obtain a packed column.

The packed column was connected to a supercritical fluid chromatograph (produced by Nihon Bunkc) and separation and refinement with a carbon dioxide supercritical fluid was conducted under the conditions shown in Table 1. Fish oil and fat was hydrolyzed by an ordinary method to obtain a mixture of fatty acids composed of 3.3% of C_{14:0}, 16.9% of C_{16:0}, 5.2% of C_{18:0}, 16.3% of C_{18:1}, 12.2% of C_{20:5}, 30.0% of C22:6 and the balance 14.3%. (The former subscript in each C represents the nuder of carbons and the latter subscript the number of carbon-carbon double bonds of the corresponding fatty acid. Therefore, C_{20:5} represents EPA and C_{22:6} DHA.) The mixture of fatty acids was then esterified by ethyl alcohol and used as a sample.

The packed column was equilibrated under the conditions for the step I in Table 1, and loaded with 2.72 g of the sample. The conditions were changed from the step I to the step II. Each fraction was separated at every 15 minutes, and after the solvent was distilled off, the yield and the purity of each fraction were obtained.

**TABLE 1**

| | Pressure Kg/cm² | Temperature °C | CO₂ flow rate ml/min | Acetone flow rate ml/min | Fraction No. |
|---|---|---|---|---|---|
| I | 200 | 50 | 8.5 | 1.5 | (1) to (10) |
| II | 200 | 50 | 6 | 4 | (11) to (17) |

Conditions were changed from step I to step II.

Each fraction was sampled at every 15 minutes.

The purity of each fraction was obtained from the area percentage of the gas chromatogram. From the fractions (11) to (17) at the step II, 0.59 g of DHA having a purity of 99.5% was obtained. (The recovery of DHA was 72.3%.)

Fig. 9 shows the purities of EPA and DHA in each fraction, and Fig. 10 shows the yield of each fraction and the weights of EPA and DHA. The weights of EPA and DHA were obtained from the purities thereof in each fraction and the yield of each fraction.

### Example 5

Separation and refinement was conducted in the same packed column as that in Example 1 with a carbon dioxide supercritical fluid under the conditions shown in Table 2. A mixture of fatty ethyl esters prepared from oil and fat containing 5.9% of γ-linolenic acid was used as a sample.

The mixture was composed of 0.8% of C_{14:0}, 27.6% of C_{16:0}, 6.5% of C_{18:0}, 42.6% of C_{18:1}, 8.9% of C_{18:2}, 5.9% of C_{18:3} and the balance 6.4%.
The packed column was equilibrated under the conditions for the step I in Table 2, and loaded with 2.64 g of the sample. The conditions were changed in the order of steps I, II, III and IV. Each fraction was separated at every 15 minutes, and after the solvent was distilled off, each fraction was weighed and analyzed by gas chromatography.

**TABLE 2**

| | Pressure Kg/cm² | Temperature °C | CO₂ flow rate ml/min | Acetone flow rate ml/min | Fraction No. |
|---|---|---|---|---|---|
| I | 200 | 50 | 9.5 | 0.5 | (1) to (10) |
| II | 200 | 50 | 9.4 | 0.6 | (11) |
| III | 200 | 50 | 9.3 | 0.7 | (12) |
| IV | 200 | 50 | 9.2 | 0.8 | (13) |
| V | 200 | 50 | 9.1 | 0.9 | (14) |
| VI | 200 | 50 | 9.0 | 1.0 | (15) |
| VII | 200 | 50 | 8.9 | 1.1 | (16) |
| VIII | 200 | 50 | 8.8 | 1.2 | (17) |
| IX | 200 | 50 | 8.7 | 1.3 | (18) |
| X | 200 | 50 | 8.5 | 1.5 | (19) |
| XI | 200 | 50 | 6.0 | 4.0 | (20) |

The purity of each fraction was obtained from the area perceptage of the gas chromatogram. From the fractions (17), (18), (19) and (20) at the steps IX, X and XI, a γ-linolenic ethyl ester having a purity of not less than 75% was obtained.

Table 3 shows the purities, yields and recoveries of γ-linolenic ethyl ester in the main fractions.

**TABLE 3**

| Fraction No. | Purity (%) | Yield (g) | Recovery (%) |
|---|---|---|---|
| (17) to (20) | 76.2 | 0.153 | 74.8 |
| (18) to (20) | 77.2 | 0.125 | 61.7 |
| (19), (20) | 77.5 | 0.099 | 49.3 |
| (20) | 77.9 | 0.076 | 37.8 |

Fig. 11 shows the purities of C_{16:0}, C_{18:1}, C_{18:2} and C_{18:3} in each fraction. Fig. 12 shows the yield of each fraction.

### Example 6

The column produced in Example 4 was connected to a liquid chromatograph (Shimazu Seisakusho Ltd.) and separation and refinement was conducted under the conditions show in Table 4. The same sample as that in Example 4 was used.

The packed column was equilibrated under the conditions for the step I in Table 4, and loaded with 2.58 g of the sample. The conditions were changed in the order of steps I, II, III and IV. Each fraction was separated at every 10 minutes, and after the solvent was distilled off, the yield and the purity of each fraction were obtained.

**TABLE 4**

| | Temperature °C | Hexane flow rate ml/min | Acetone flow rate ml/min | Fraction No. |
|---|---|---|---|---|
| I | RT | 10 | 0 | (1) to (6) |
| II | RT | 9.9 | 0.1 | (7) to (11) |
| III | RT | 9.5 | 0.5 | (12) to (16) |
| IV | RT | 6 | 4 | (17) to (20) |

The purity of each fraction was obtained from the area percentage of the gas chromatogram From the fractions (14) to (19) at the step IV, 0.35 g of DHA having a purity of 99.1% was obtained. (The recovery was 45.2%.)

Fig. 13 shows the purities of EPA and DHA in each fraction, and Fig. 14 shows the yield of each fraction and the weights of EPA and DHA.

### Example 7

Purification of DHA-containing triglyceride was conducted with a carbon dioxide supercritical fluid by using the same apparatus as that in Example 4. The fish oil and fat before esterification used in Example 4 was used as a sample.

The packed column was equilibrated under the conditions for the step I in Table 5, and loaded with 2.70 g of the sample. The conditions were changed in the order of steps I, II, III and IV. Each fraction was separated at every 15 minutes, and after the solvent was distilled off, each fraction was weighed and analyzed by gas chromatography. Before the gas chromatography, the sample was esterified by an ordinary method.

The purity of each fraction was obtained from the area percentage of the gas chromatogram. From the fractions (9) to (14) at the steps III and IV, triglyceride containing about 40% of DHA as the structural fatty acid was obtained. Table 6 shows the purity, the yield and the recovery of DHA in the fractions 9 to 14.

Fig. 15 shows the purities of EPA and DHA in each fraction, and Fig. 16 shows the yield of each fraction and the yields of EPA and DHA in each fraction.

**TABLE 5**

| | Pressure Kg/cm² | Temperature °C | CO₂ flow rate ml/min | Acetone flow rate ml/min | Fraction No. |
|---|---|---|---|---|---|
| I | 200 | 50 | 9 | 1 | (1) to (4) |
| II | 200 | 50 | 8.5 | 1.5 | (5) to (8) |
| III | 200 | 50 | 8 | 2 | (9) to (12) |
| IV | 200 | 50 | 6 | 4 | (13) to (16) |

**TABLE 6**

| Fraction No. | Purity (%) | Yield (g) | Recovery (%) |
|---|---|---|---|
| (9) to (14) | 45.23 | 0.26 | 39.95 |

As described above, the cation-exchanged clay mineral of the present invention which is used as a packing material for chromatography provides excellent resolution and stability.

## Claims

1. A packing material for chromatography, comprising a swelling clay mineral with the cations between layers substantially replaced by low-valence metal ammine complexes.

2. A material according to claim 1, wherein the complexes are represented by the formula [M(NH₃)₁₋₃]X, wherein M is a metal and X is an anion.

3. A material according to claim 2, wherein M is selected from monovalent copper, silver and gold.

4. A method of producing a packing material for chromatography, comprising the steps of:
immersing a dried swelling clay mineral in a low-valence metal ammine complex solution, so as to substantially replace the cations between layers by said low-valence metal ammine complex; and
heating the clay mineral which had been immersed.

5. A method according to claim 4, which additionally comprises the prior steps of immersing a swelling clay mineral in an ammonium ion solution, and drying the swelling clay mineral.

6. A method according to claim 4 or claim 5, wherein the complex is as defined in claim 2 or claim 3.

7. A method of separating fish oil and fat, comprising separating and collecting docosahexaenoic acid by using a packing material according to any of claims 1 to 3.

8. A method according to claim 7, wherein a fatty ester obtained by hydrolyzing and further esterifying fish oil and fat is used as an object of separation.

9. A method according to claim 7 or claim 8, wherein a supercritical fluid is used as a solvent.

## Patentansprüche

1. Packungsmaterial für die Chromatographie, umfassend ein quellendes Tonmineral, bei welchem die Kationen zwischen Schichten im wesentlichen durch niedrigwertige Metallammin-Komplexe ersetzt sind.

2. Material nach Anspruch 1, in welchem die Komplexe durch die Formel [M(NH₃)₁₋₃]X dargestellt werden, worin M ein Metall ist und X ein Anion ist.

3. Material nach Anspruch 2, in welchem M aus einwertigem Kupfer, Silber und Gold ausgewählt ist.

4. Verfahren zur Herstellung eines Packungsmaterials für die Chromatographie, umfassend die Schritte:
Eintauchen eines getrockneten quellenden Tonminerals in eine Lösung eines niedrigwertigen Metallammin-Komplexes, um die Kationen zwischen Schichten im wesentlichen durch den niedrigwertigen Metallammin-Komplex zu ersetzen; und
Erwärmen des Tonminerals, das eingetaucht worden war.

5. Verfahren nach Anspruch 4, welches zusätzlich die vorangehenden Schritte des Eintauchens eines quellenden Tonminerals in eine Ammoniumion-Lösung und Trocknen des quellenden Tonminerals umfaßt.

6. Verfahren nach Anspruch 4 oder Anspruch 5, in welchem der Komplex wie in Anspruch 2 oder Anspruch 3 definiert ist.

7. Verfahren zur Auftrennung von Fischöl und -fett, umfassend das Auftrennen und Sammeln von Docosahexaensäure unter Verwendung eines Packungsmaterials nach irgendeinem der Ansprüche 1 bis 3.

8. Verfahren nach Anspruch 7, in welchem ein Fettester, der durch Hydrolyse und weitere Veresterung von Fischöl und -fett erhalten wurde, als Gegenstand der Auftrennung verwendet wird.

9. Verfahren nach Anspruch 7 oder Anspruch 8, in welchem ein superkritisches Fluid als ein Lösungsmittel verwendet wird.

## Revendications

1. Matériau de garnissage pour chromatographie, comprenant un minéral à base d'argile foisonnant avec les cations entre couches essentiellement remplacés par des complexes ammine métal de faible valence.

2. Matériau selon la revendication 1, dans lequel les complexes sont représentés par la formule [M(NH₃)₁₋₃]X, dans laquelle M est un métal et X est un anion.

3. Matériau selon la revendication 2, dans lequel M est choisi parmi le cuivre, l'argent et l'or monovalents.

4. Procédé de production d'un matériau de garnissage pour chromatographie, comprenant les étapes consistant à:
immerger un minéral à base d'argile foisonnant séché dans une solution de complexe ammine métal de faible valence, de façon à remplacer essentiellement les cations entre couches par ledit complexe ammine métal de faible valence; et
chauffer le minéral à base d'argile qui a été immergé.

5. Procédé selon la revendication 4, qui comprend de plus les étapes préliminaires consistant à immerger un minéral à base d'argile foisonnant dans une solution d'ion ammonium, et sécher le minéral à base d'argile foisonnant.

6. Procédé selon la revendication 4 ou 5, dans lequel le complexe est tel que défini dans la revendication 2 ou la revendication 3.

7. Procédé de séparation de graisse et d'huile de poisson, comprenant les étapes consistant à séparer et recueillir de l'acide docosahexaénoïque en utilisant un matériau de garnissage selon l'une quelconque des revendications 1 à 3.

8. Procédé selon la revendication 7, dans lequel un ester gras obtenu en hydrolysant et ensuite estérifiant de la graisse et de l'huile de poisson est utilisé comme objet de la séparation.

9. Procédé selon la revendication 7 ou la revendication 8, dans lequel un fluide supercritique est utilisé comme solvant.
